(19) Europäisches Patentamt
European Patent Office
Office européen des brevets

(11) **EP 1 604 805 B1**

(12) **EUROPÄISCHE PATENTSCHRIFT**

(45) Veröffentlichungstag und Bekanntmachung des Hinweises auf die Patenterteilung:
**07.01.2015  Patentblatt 2015/02**

(51) Int Cl.:
**F16L 47/06** *(2006.01)*     **B29C 65/00** *(2006.01)*
**B29C 65/06** *(2006.01)*

(21) Anmeldenummer: **05008885.5**

(22) Anmeldetag: **22.04.2005**

(54) **Verbindungsvorrichtung für Leitungen, Kraftfahrzeug mit einer derartigen Verbindungsvorrichtung und Verfahren zum Verbinden von Leitungen**

Connection device for conduits, vehicle including such a connection device and method for connecting conduits

Dispositif de raccordement de conduits, véhicule comportant un tel dispositif de raccordement et procédé de raccordement de conduits

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **08.06.2004   DE 102004027831**

(43) Veröffentlichungstag der Anmeldung:
**14.12.2005   Patentblatt 2005/50**

(73) Patentinhaber: **VERITAS AG**
**63571 Gelnhausen (DE)**

(72) Erfinder:
• **Hattass, Dirk**
**63584 Gründau (DE)**

• **Naumann, Volker**
**63619 Bad Orb (DE)**

(74) Vertreter: **Klinski, Robert et al**
**PATENTSHIP**
**Patentanwaltskanzlei**
**Elsenheimerstraße 65**
**80687 München (DE)**

(56) Entgegenhaltungen:
**EP-B- 0 988 488     WO-A1-02/01102**
**DE-A1- 3 903 551     GB-A- 2 056 330**
**US-A- 6 053 214**

**Beschreibung**

Die Erfindung bezieht sich auf eine Verbindungsvorrichtung, insbesondere auf einen Quick-Connector für Leitungen mit wenigstens zwei Anschlüssen, von denen wenigstens ein Anschluss zwei Fortsätze umfasst, die einen Aufnahmebereich für ein Leitungsende bilden, wobei einer der beiden Fortsätze einen ersten Abschnitt und einen zweiten Abschnitt mit einer größeren Wandstärke als der erste Abschnitt aufweist. Die Erfindung bezieht sich ferner auf ein Kraftfahrzeug mit einer solchen Verbindungsvorrichtung und auf ein Verfahren zum Verbinden von Leitungen mit Hilfe einer derartigen Verbindungsvorrichtung.

Eine Verbindungsvorrichtung der eingangs genannten Art ist beispielsweise aus der EP 0 988 488 B1 bekannt.

Vorrichtungen zum Verbinden von Leitungen, insbesondere Quick-Connectoren, werden üblicherweise in Tanksystemen oder Belüftungssystemen eingesetzt. Derartige Verbindungsvorrichtungen müssen eine dauerhafte und sichere Verbindung von fluidführenden Leitungen gewährleisten, ohne dass das in den Leitungen geführte Medium an der Verbindungsvorrichtung austritt. Die Sicherheit der Verbindung ist insbesondere bei der Kopplung von Druckleitungen relevant. Außerdem müssen Tanksysteme strenge gesetzliche Vorgaben hinsichtlich der Emission von Kohlenwasserstoffen erfüllen. In Tanksystemen eingesetzte Verbindungsvorrichtungen müssen deshalb die Permeation von Kohlenwasserstoffen wirkungsvoll unterdrücken.

Die herkömmlich verwendeten Quick-Connectoren sind mit einem Schlauchanschluss versehen, der einen Stutzen umfasst, auf dessen Außenseite mehrere Wülste bzw. hakenförmige Hinterschneidungen (Tannenbaumstruktur) angeordnet sind. Ein auf einen solchen Stutzen aufgeschobener Schlauch bildet mit diesem eine formschlüssige, mechanisch feste Verbindung, die allerdings den gestiegenen Anforderungen an die Dichtigkeit des Quick-Connectors, insbesondere im Hinblick auf die Permeation von Kohlenwasserstoffen, nicht genügt.

Andere Verbindungsmöglichkeiten, wie beispielsweise das Laserschweißen, erfordern den Einsatz bestimmter transparenter Werkstoffe, die relativ teuer sind und die Werkstoffauswahl einschränken. Hervorragende Ergebnisse hinsichtlich der Festigkeit und Dichtigkeit der Verbindungen werden durch Verkleben von Quick-Connectoren und Leitungen erzielt. Allerdings ist diese Verbindungsart relativ kostspielig und somit nicht für jeden Preissektor geeignet.

Eine vergleichsweise billige und trotzdem qualitativ hochwertige, d.h. dichte und feste Verbindung zwischen einem Quick-Connector und einer Leitung kann durch Reibschweißen erzielt werden.

Dabei werden die zu verbindenden Teile in relative Rotation versetzt, wobei aufgrund der Relativbewegung zwischen den beiden Teilen und der damit erzeugten Reibungswärme an den Berührungsflächen die Randzonen der beiden Teile aufschmelzen und verschweißen. Auf diese Weise wird eine stoffschlüssige Verbindung zwischen der Leitung und dem Quick-Connector hergestellt, die sowohl mechanisch fest als auch gas- bzw. flüssigkeitsdicht ist. Außerdem besteht eine große Auswahl an Materialien, insbesondere Kunststoffen, die für das Reibschweißen geeignet sind.

Beim Reibschweißen kommt es darauf an, dass eine möglichst große Berührungsfläche zwischen den zu verbindenden Teilen vorgesehen ist, um eine möglichst große Schweißfläche zu erzielen. Aus diesem Grunde werden die Anschlüsse von Quick-Connectoren üblicherweise als konzentrische Doppelzylinder ausgeführt, zwischen denen eine Ringnut zur Aufnahme des Leitungsendes vorgesehen ist. Dadurch wird die Innenseite des zu verschweißenden Rohres mit der Außenseite des inneren Zylinders und die Außenseite des Rohres mit der Innenseite des äußeren Zylinders verschweißt.

Beispiele für solche Leitungsverbindungen sind aus der FR 2 737 548, DE 39 41 236 A1 und DE 39 03 551 C2 bekannt.

Zum leichteren Einschieben des Rohrendes in den Ringspalt ist dieser im Bereich der Eintrittsöffnung mit einer umlaufenden Fase versehen, die in bekannter Weise auch der Zentrierung des Rohres dient.

Aus der FR 2 737 548 ist es ferner bekannt, den Außendurchmesser des Innenzylinders so zu wählen, dass das Rohr beim Aufschieben auf den Innenzylinder aufgeweitet wird, wodurch eine weitere Verbesserung der Festigkeit der Verbindung erzielt wird.

Diese bekannten Quick-Connectoren haben den Nachteil, dass trotz der Fase am freien Zylinderende eine automatisierte Montage des Quick-Connectors auf die Leitung nur schwer durchführbar ist.

Eine Verbesserung bietet der aus der gattungsbegründenden EP 0 988 488 B1 bekannte Quick-Connector, der ebenfalls einen Anschluss mit zwei ringförmigen Fortsätzen aufweist. Bei diesem bekannten Quick-Connector ist die das Leitungsende aufnehmende Nut mit sich verjüngenden Innenflächen ausgebildet. Das bedeutet, dass die Außenfläche des inneren Fortsatzes als Konus ausgebildet ist. Dadurch wird erreicht, dass das Rohr beim Aufschieben auf den inneren ringförmigen Fortsatz aufgeweitet wird und während des gesamten Montagevorganges zentriert bleibt.

Dieser bekannte Quick-Connector hat allerdings den Nachteil, dass das Rohrende im Bereich des Nutgrundes stärker komprimiert wird als im Bereich der Eintrittsöffnung der Ringnut. Dadurch kommt es zu unterschiedlichen Anpressdrücken entlang der Schweißfläche und somit zu einer ungleichmäßigen Verschweißung. Außerdem ist der bekannte Quick-Connector nur für relativ elastische, insbesondere mehrlagige Kunststoffrohre geeignet. Da ferner das Aufstecken des Rohres auf den Quick-Connector mit relativ viel Kraft erfolgen muss, ist der bekannte Quick-Connector für die automatisierte Montage nur bedingt geeignet.

Der Erfindung liegt daher die Aufgabe zugrunde, eine Verbindungsvorrichtung für Leitungen anzugeben, die eine prozessoptimierte Anpassung an insbesondere automatisierte Montageabläufe gestattet. Der Erfindung liegt ferner die Aufgabe zugrunde, ein Kraftfahrzeug mit einer derartigen Verbindungsvorrichtung sowie ein Verfahren zum Verbinden von Leitungen anzugeben.

Erfindungsgemäß wird die Aufgabe hinsichtlich der Verbindungsvorrichtung durch den Gegenstand des Anspruchs 1 gelöst. Hinsichtlich des Kraftfahrzeuges wird die Aufgabe durch den Gegenstand des Anspruchs 7 und hinsichtlich des Verfahrens durch den Gegenstand des Anspruchs 8 gelöst.

Die Erfindung hat den Vorteil, dass durch das Vorsehen eines Überganges zwischen den beiden Abschnitten mit unterschiedlicher Wandstärke und die kurvenförmige Ausbildung der aufnahmebereichsseitigen Wand des Überganges eine flexible Anpassung der Geometrie des Quick-Connectors an bestimmte Montageanforderungen ermöglicht wird, so dass Montageabläufe, insbesondere automatisierte Montageabläufe optimiert werden können. Insbesondere lässt sich durch die kurvenförmige Ausbildung der Wand des Überganges die Aufschiebecharakteristik des Quick-Connectors, beispielsweise unter Berücksichtigung der Elastizität des zu verbindenden Rohres bzw. Schlauches beeinflussen. Außerdem wird durch die kurvenförmige Ausbildung der Übergangswand erreicht, dass das Aufweiten des Rohres nur im Bereich des Überganges stattfindet, so dass im Bereich des zweiten Abschnittes mit der größeren Wandstärke das Rohr konstant aufgeweitet ist und somit in diesem Bereich ein gleichmäßiger Anpressdruck ausgeübt wird. Dadurch wird die Qualität der Schweißverbindung verbessert.

Erfindungsgemäß ist ein Abschnitt der Wand im Bereich des ersten Abschnittes des Fortsatzes konkav ausgebildet. Dadurch wird ein besonders sanfter Übergang im Bereich des ersten Abschnittes hergestellt, so dass das Rohr besonders einfach mit geringem Widerstand aufgeschoben werden kann.

Ferner ist ein Abschnitt der Wand im Bereich des zweiten Abschnittes des Fortsatzes konvex ausgebildet, so dass der Übergang im Bereich des zweiten Abschnittes kontinuierlich ist. Auf diese Weise kann sich das aufgeweitete Rohr über eine größere Länge an den inneren Fortsatz anschmiegen, so dass die für das Reibschweißen zur Verfügung stehende Berührungsfläche vergrößert wird. Dies ist insbesondere bei weniger elastischen Rohren vorteilhaft.

Es hat sich gezeigt, dass besonders gute Ergebnisse erzielt werden, wenn der Wendepunkt zwischen den konkaven und konvexen Abschnitten der Wand im Bereich der Eintrittsöffnung des Aufnahmebereichs angeordnet ist. Eine weitere prozessoptimierte Ausgestaltung der Geometrie des Anschlusses kann dadurch erfolgen, dass der konkave und konvexe Abschnitt der Wand etwa gleich lang sind. Diese beiden Maßnahmen führen jeweils dazu, dass die Aufweitung und gleichzeitig die Zentrierung des Rohres sicher erfolgen.

Ferner kann ein freies Ende wenigstens eines der Fortsätze ballig ausgebildet sein.

Nachfolgend wird die Erfindung beispielsweise mit weiteren Einzelheiten unter Bezug auf die beigefügten Zeichnungen erläutert. In diesen zeigen:

Fig. 1     einen Längsschnitt durch ein Ausführungsbeispiel der erfindungsgemäßen Verbindungsvorrichtung;

Fig. 2     eine perspektivische Ansicht des für das Reibschweißen vorgesehenen Anschlusses der Verbindungsvorrichtung nach Fig. 1, und

Fig. 3     einen vergrößerten Teilausschnitt des für das Reibschweißen vorgesehenen Anschlusses der Verbindungsvorrichtung nach Fig. 1.

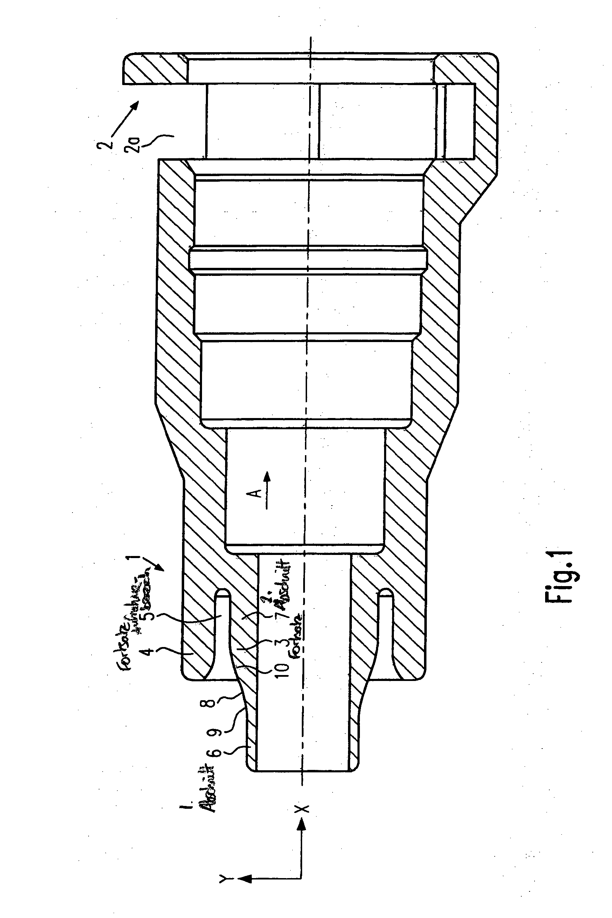

In Fig. 1 ist eine erfindungsgemäße Verbindungsvorrichtung in der Form eines Quick-Connectors gezeigt, die insbesondere zur Verbindung von Kraftstoffschläuchen in Kraftfahrzeugen zum Einsatz kommt. Diese Verbindungsvorrichtung weist zwei Anschlüsse 1, 2 auf, die jeweils am axialen Ende der Vorrichtung vorgesehen sind. Die Erfindung ist nicht auf Verbindungsvorrichtungen bzw. Quick-Connectoren mit nur zwei Anschlüssen beschränkt, obwohl diese natürlich die übliche Ausgestaltung derartiger Leitungskupplungen sind.

Der in Fig. 1 gezeigte rechte Anschluss 2 ist zur Aufnahme einer Leitung vorgesehen, die mittels eines nicht gezeigten Clips, der in die Aussparung 2a eingeführt wird, fixiert werden kann.

Der in Fig. 1 gezeigte linke Anschluss 1 ist zum Verbinden der Vorrichtung mit einer Leitung durch Reibschweißen vorgesehen. Dazu umfasst der Anschluß 1 zwei Fortsätze 3,4, die beispielsweise als ringförmige Fortsätze ausgebildet sind, wodurch das Verschweißen durch rotative Relativbewegung ermöglicht wird. Wenn das Verschweißen nur durch eine axiale Relativbewegung erfolgen soll, sind Fortsätze mit anderen Geometrien ebenfalls denkbar.

Die beiden Fortsätze umfassen einen äußeren Fortsatz 4 und einen inneren Fortsatz 3, die konzentrisch zueinander angeordnet sind. Zwischen den beiden Fortsätzen 3,4 ist ein Ringspalt als Aufnahmebereich 5 ausgebildet, in den das Leitungsende zum Verschweißen eingeschoben wird. Dabei ist die Breite des Aufnahmebereichs 5 in radialer Richtung, bezogen auf die Wandstärke der Leitung so bemessen, dass die Leitungsaußenseite an der Innenseite des äußeren Fortsatzes 4 und die Leitungsinnenseite an der Außenseite des inneren Fortsatzes 3 anliegt, wodurch zwei konzentrische Berührungsflächen gebildet werden.

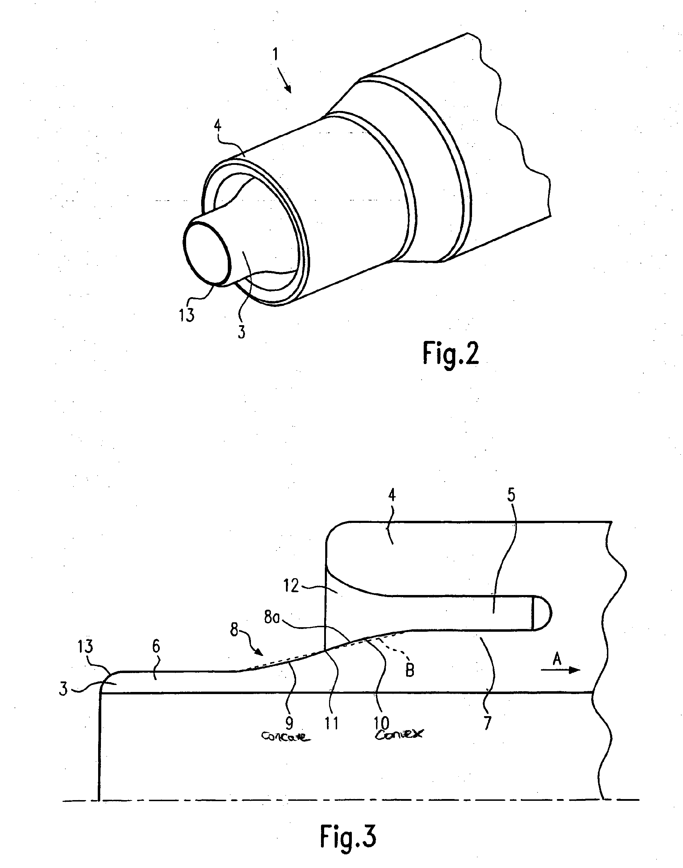

In Fig. 1 und insbesondere in Fig. 3 ist gezeigt, dass der innere Fortsatz 3 zwei im wesentlichen zylindrische Abschnitte 6, 7 aufweist, die voneinander beabstandet sind.

Der in Längsrichtung A der Verbindungsvorrichtung hintere Abschnitt 7 (zweiter Abschnitt), d.h. der connectorseitige Abschnitt 7, weist eine größere Wandstärke auf als der in Längsrichtung A vordere Abschnitt 6 (erster Abschnitt), d.h. der leitungsseitige Abschnitt 6. Mit anderen Worten ist der Außendurchmesser des hinteren Abschnittes 7 größer als der Außendurchmesser des vorderen Abschnittes 6. Ferner begrenzt zumindest der hintere Abschnitt 7 den Aufnahmebereich 5 in Umfangsrichtung.

Das bedeutet, dass der hintere Abschnitt 7 mit dem Leitungsende in Berührung kommt und mit einer Innenfläche des Leitungsendes verschweißt wird. Durch die größere Wandstärke des hinteren Abschnitts 7 wird dessen Festigkeit erhöht, so dass der hintere Abschnitt 7 beim Reibschweißen, aber auch im Betrieb, d.h. im verbundenen Zustand, belastbar ist.

Generell kommt es darauf an, dass der Außendurchmesser des hinteren Abschnittes 7 größer ist als der Außendurchmesser des vorderen Abschnittes 6, um die Aufweitung des Leitungsendes zu erreichen.

Bei Bedarf, wenn beispielsweise nur geringe Belastungen des hinteren Abschnittes 7 zu erwarten sind, kann die Durchmesserdifferenz zwischen dem hinteren und vorderen Abschnitt 6,7 auf andere Weise realisiert werden. So ist es möglich, anstelle der unterschiedlichen Wandstärken dieselbe Wandstärke für den vorderen und hinteren Abschnitt 6,7 zu wählen und den größeren Außendurchmesser des hinteren Abschnittes 7 durch eine Aufweitung des hinteren Abschnittes 7 zu erzielen.

Zwischen den beiden Abschnitten 6,7 ist ein Übergang 8 vorgesehen, der den Höhenunterschied zwischen den beiden Abschnitten 6,7 ausgleicht.

Wie in Fig. 3 gezeigt, weist der Übergang 8 eine aufnahmebereichsseitige Wand 8a auf, die kurvenförmig ausgebildet ist, wie der Vergleich mit einer, in Strichlinien gekennzeichneten und gedachten, geraden Linie B ergibt, die die beiden Abschnitte 6,7 verbindet. Die Wand 8a weist insbesondere einen ersten Abschnitt 9 auf, der konkav gewölbt ist. Dieser konkave Abschnitt 9 geht in einen zweiten Abschnitt 10 über, der konvex gewölbt ist. Zwischen den beiden Abschnitten 9,10 befindet sich ein Wendepunkt 11.

Der in Längsrichtung vordere Absatz 6 des inneren Fortsatzes 3 ist im wesentlichen zylindrisch ausgebildet und geht kontinuierlich in den konkaven Abschnitt 9 der Wand 8a des Übergangs 8 über. Der sich an den konkaven Abschnitt 9 anschließende konvexe Abschnitt 10 der Wand 8a geht ebenfalls kontinuierlich in den in Längsrichtung A hinteren Abschnitt 7 des inneren Fortsatzes über. Dieser hintere Absatz 7 ist ebenfalls im wesentlichen zylindrisch.

In der in Fig. 3 gezeigten Ausführungsform ist die Wand 8a so ausgestaltet, dass der konkave und konvexe Abschnitt 9, 10 etwa gleich lang sind. Außerdem ist der Wendepunkt 11 im Bereich der Eintrittsöffnung 12 des Aufnahmebereichs 5 angeordnet. Diese Ausgestaltung ist beispielhaft zu verstehen. Je nach den unterschiedlichen Montageanforderungen kann zur Prozessoptimierung die Kurvenform der Wand 8a, d.h. die Steigung oder die Krümmung der einzelnen Abschnitte 9,10 und/oder deren jeweilige Länge, also die Lage des Wendepunktes 11 beeinflusst werden.

Beispielsweise ist es möglich, den Wendepunkt 11 näher an den hinteren Abschnitt 7 zu verlegen, so dass die Aufweitung des Rohres im Bereich des Abschnittes 9 allmählich erfolgt und dann im Bereich des steileren Abschnittes 10 verstärkt wird, so dass eine Schwelle überwunden werden muss. Außerdem ist es möglich, den hinteren Abschnitt 7 dadurch zu verlängern, dass der Übergang 8 insgesamt in Richtung des freien Endes des inneren Fortsatzes 3 verlegt wird, so dass der vordere Abschnitt 6 verkürzt wird. Dadurch wird eine Vergrößerung der Schweißfläche erzielt.

Im vorliegenden Beispiel ist die Länge des inneren Fortsatzes 3 größer als die Länge des äußeren Fortsatzes 4. Selbstverständlich ist es möglich, den äußeren Fortsatz 4 länger als den inneren Fortsatz 6 auszubilden und das in Fig. 1 gezeigte Profil des inneren Fortsatzes 3 am äußeren Fortsatz 4 zu realisieren. Der Grundaufbau dieses Anschlusses würde, abgesehen von der erfindungsgemäßen Kurvengeometrie, dem in Fig. 3 der FR 2 737 548 gezeigten Anschluss, bei dem der Innenzylinder kürzer als der Außenzylinder ist, entsprechen. Selbstverständlich ist es auch möglich, den inneren und den äußeren Fortsatz gleichlang auszuführen, wie im Prinzip, abgesehen von der erfindungsgemäßen Kurvengeometrie, in Fig.1 der FR 2 737 548 gezeigt.

Der in Fig. 3 gezeigte polynomische Profilverlauf des inneren Fortsatzes 3 kann beispielsweise durch die folgende Gleichung dargestellt werden:

$$Y = 0{,}0002\, x^5 - 0{,}006\, x^4 + 0{,}0493\, x^3 - 0{,}1395\, x^2 + 0{,}1539\, x + 2{,}8929.$$

Der Profilverlauf des äußeren Fortsatzes 4 lässt sich durch die folgende Gleichung darstellen:

$$y = 0{,}0059\,x^5 + 0{,}2301x^4 - 3{,}5969x^3 + 27{,}939x^2 - 107{,}86x + 173{,}91$$

Die Koordinaten beziehen sich auf die Längsachse der Verbindungsvorrichtung als Mittellinie, deren Nullpunkt an der Vorderkante des freien Endes des inneren Fortsatzes 3 liegt.

Es hat sich als besonders vorteilhaft herausgestellt, wenn das Verhältnis zwischen dem Außendurchmesser des vorderen Abschnittes 6 und dem Außendurchmesser des hinteren Abschnittes 7 in einem Bereich von 0,6 bis 0,9, insbesondere bei 0,8 liegt. Der Außendurchmesser des vorderen, schmäleren Abschnittes 6 kann zwischen 5 und 10 mm, insbesondere 5,9 mm, 6 mm, 9,9 mm oder 10 mm betragen. Der Außendurchmesser des hinteren, breiteren Abschnittes kann in einem Bereich zwischen 7 und 12,5 mm liegen. Dabei sind insbesondere die Durchmesserpaarungen (Außendurchmesser vorderer Abschnitt/Außendurchmesser hinterer Abschnitt) von 5,9/7,5 mm, 6/8 mm, 9,9/12,5 mm und 10/12 mm in bevorzugter Weise zu realisieren. Der Radius des ballig ausgeführten freien Endes 13 des inneren Fortsatzes kann 0,4 mm betragen. Dasselbe gilt für den Radius im Nutgrund.

Zum Verbinden eines Leitungsendes mit der in den Fig. 1 bis 3 gezeigten Verbindungsvorrichtung wird das Leitungsende auf den inneren Fortsatz 3 aufgesteckt, wobei das Leitungsende beim Aufschieben im Bereich des Überganges 8 aufgeweitet wird, und dann im Bereich des hinteren Abschnittes 7 den aufgeweiteten Zustand beibehält. Daraufhin werden die Verbindungsvorrichtung und/oder das Rohr in eine Rotationsbewegung versetzt, wodurch Reibungswärme zwischen dem Rohrende und der Verbindungsvorrichtung im Bereich des Aufnahmebereichs 5 erzeugt wird. Damit wird eine Schweißverbindung zwischen dem Leitungsende und der Verbindungsvorrichtung hergestellt.

Die erfindungsgemäße Verbindungsvorrichtung hat den Vorteil, dass der Kurvenverlauf der Wand 8a im Bereich des Übergangs 8 an die jeweiligen Montageanforderungen angepasst werden kann, so dass die jeweiligen Montageabläufe prozessoptimiert werden können.

**Patentansprüche**

1. Verbindungsvorrichtung, insbesondere Quick-Connector, für Leitungen, mit wenigstens zwei Anschlüssen (1,2), von denen wenigstens ein Anschluss (1,2) zwei Fortsätze (3,4) umfasst, die einen Aufnahmebereich (5) für ein Leitungsende bilden, wobei einer der beiden Fortsätze (3,4) einen ersten Abschnitt (6) und einen zweiten Abschnitt (7) mit einer größeren Wandstärke als der erste Abschnitt (6) aufweist,
**dadurch gekennzeichnet, dass**
zwischen den beiden Abschnitten (6,7) des Fortsatzes (3) ein Übergang (8) mit einer aufnahmebereichsseitigen Wand (8a) vorgesehen ist, die in Längsrichtung A der Verbindungsvorrichtung kurvenförmig ausgebildet ist, wobei ein Abschnitt (9) der Wand (8a) im Bereich des ersten Abschnittes (6) des Fortsatzes (3) konkav und ein Abschnitt (10) der Wand (8a) im Bereich des zweiten Abschnittes (7) des Fortsatzes (3) konvex ausgebildet ist.

2. Verbindungsvorrichtung nach Anspruch 1, **dadurch gekennzeichnet, dass** ein Wendepunkt (11) zwischen den konkaven und konvexen Abschnitten (9,10) der Wand (8) im Bereich der Eintrittsöffnungen (12) des Aufnahmebereichs (5) angeordnet ist.

3. Verbindungsvorrichtung nach Anspruch 1 oder 2, **dadurch gekennzeichnet, dass** der konkave und konvexe Abschnitt (9,10) der Wand (8a) etwa gleich lang sind.

4. Verbindungsvorrichtung nach wenigstens einem der Ansprüche 1 bis 3, **dadurch gekennzeichnet, dass** ein freies Ende (13) wenigstens eines der Fortsätze (3,4) ballig ausgebildet ist.

5. Kraftfahrzeug mit einer Verbindungsvorrichtung nach einem der Ansprüche 1 bis 4.

6. Verfahren zum Verbinden von Leitungen mit den Schritten:

   - Einschieben eines Leitungsendes in den Aufnahmebereich (5) der Verbindungsvorrichtung nach wenigstens einem der Ansprüche 1 bis 4, und
   - Durchführen einer Relativbewegung zwischen dem Leitungsende und der Verbindungsvorrichtung zur Erzeugung von Reibungswärme zum Verschweißen des Leitungsendes mit dem Aufnahmebereich (5) der Verbindungsvorrichtung.

**Claims**

1. Connecting apparatus, in particular a quick connector, for lines, having at least two connectors (1, 2), of which at least one connector (1, 2) comprises two projections (3, 4) which form a receptacle region (5) for a line end, one of the two projections (3, 4) having a first section (6) and a second section (7) with a greater wall thickness than the first section (6), **characterized in that** a transition (8) with a receptacle region-side wall (8a) is provided between the two sections (6, 7) of the projection (3), which receptacle region-side wall (8a) is of curved configuration in the longitudinal direction A of the connecting apparatus, a section (9) of the wall (8a) being of concave configuration in the region of the first section (6) of the projection (3), and a section (10) of the wall (8a) being of convex configuration in the region of the second section (7) of the projection (3).

2. Connecting apparatus according to Claim 1, **characterized in that** a reversal point (11) between the concave and convex sections (9, 10) of the wall (8) is arranged in the region of the inlet openings (12) of the receptacle region (5).

3. Connecting apparatus according to Claim 1 or 2, **characterized in that** the concave and convex sections (9, 10) of the wall (8a) are approximately equally long.

4. Connecting apparatus according to at least one of Claims 1 to 3, **characterized in that** a free end (13) of at least one of the projections (3, 4) is of crowned configuration.

5. Motor vehicle having a connecting apparatus according to one of Claims 1 to 4.

6. Method for connecting lines having the steps:

    - pushing of a line end into the receptacle region (5) of the connecting apparatus according to at least one of Claims 1 to 4, and
    - performing of a relative movement between the line end and the connecting apparatus in order to generate frictional heat for welding the line end to the receptacle region (5) of the connecting apparatus.

**Revendications**

1. Dispositif de raccordement, en particulier connecteur rapide, pour conduits, comprenant au moins deux raccords (1, 2), parmi lesquels au moins un raccord (1, 2) comporte deux prolongements (3, 4) qui forment une région de réception (5) pour une extrémité de conduit, l'un des deux prolongements (3, 4) comprenant une première partie (6) et une deuxième partie (7) présentant une plus grande épaisseur de paroi que la première partie (6), **caractérisé en ce qu'**une transition (8) à une paroi (8a) située du côté de la région de réception est prévue entre les deux parties (6, 7) du prolongement (3), laquelle paroi est réalisée de manière curviligne dans la direction longitudinale A du dispositif de raccordement, une partie (9) de la paroi (8a) étant réalisée de manière concave dans la région de la première partie (6) du prolongement (3) et une partie (10) de la paroi (8a) étant réalisée de manière convexe dans la région de la deuxième partie (7) du prolongement (3).

2. Dispositif de raccordement selon la revendication 1, **caractérisé en ce qu'**un point d'inflexion (11) entre les parties concave et convexe (9, 10) de la paroi (8) est disposé dans la région des ouvertures d'entrée (12) de la région de réception (5) .

3. Dispositif de raccordement selon la revendication 1 ou 2, **caractérisé en ce que** les parties concave et convexe (9, 10) de la paroi (8a) sont approximativement de même longueur.

4. Dispositif de raccordement selon au moins l'une quelconque des revendications 1 à 3, **caractérisé en ce qu'**une extrémité libre (13) d'au moins l'un des prolongements (3, 4) est réalisée de manière bombée.

5. Véhicule automobile comprenant un dispositif de raccordement selon l'une quelconque des revendications 1 à 4.

6. Procédé de raccordement de conduits, comprenant les étapes suivantes :

    - insérer une extrémité de conduit dans la région de réception (5) du dispositif de raccordement selon au moins l'une quelconque des revendications 1 à 4 et

- effectuer un déplacement relatif entre l'extrémité de conduit et le dispositif de raccordement pour générer de la chaleur de friction pour souder l'extrémité de conduit sur la région de réception (5) du dispositif de raccordement.

Fig.1

1

4

13

3

**Fig.2**

4

5

12

8a

8

13

6

B

3

9
Concave

11

10
Convex

7

A

**Fig.3**

**EP 1 604 805 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0988488 B1
- FR 2737548
- DE 3941236 A1
- DE 3903551 C2